# NOUVEAU FASCICULE DE BREVET EUROPEEN

(11) **EP 0 438 344 B2**
(45) Date de publication et mention de la décision concernant l'opposition: **30.05.2001**
(45) Mention de la délivrance du brevet: 17.08.1994
(21) Numéro de dépôt: 91400073.2
(22) Date de dépôt: 15.01.1991
(51) Int. Cl.: H01G 4/015

(54) **Condensateur à haute énergie volumique auto-cicatrisant**
Selbstheilender Kondensator mit hoher Volumen-Energie
Self-healing capacitor with high volume energy

(30) Priorité: 19.01.1990 FR 9000608
(43) Date de publication de la demande: 24.07.1991
(73) Titulaire: TPC, 21850 Saint-Apollinaire (FR)
(72) Inventeur: Terzulli, Gilles, F-92045 Paris la Défense (FR)
(74) Mandataire: Guérin, Michel

(56) Documents cités:
- FR-A- 2 579 366
- FR-E- 53 185

## Description

La présente invention concerne un condensateur à films métallisés crénelés, dont les deux armatures sont déposées sur un film diélectrique haut polymère. Ce type de condensateur est préférentiellement présenté sous forme d'un cylindre, les films diélectriques étant enroulés sur eux-mêmes, et les connexions d'accès sont radiales, en extrémité du cylindre. Dans les modèles fonctionnant sous haute tension, des découpes dans les métallisations d'armatures rendent ce type de condensateur "auto-cicatrisant" en cas de perçage du diélectrique sous l'effet d'une décharge locale : la forme donnée aux découpes de métallisations, selon l'invention, permet d'améliorer les caractéristiques d'un condensateur.

Il est connu que, pour les condensateurs à haute énergie volumique, c'est à dire fonctionnant sous haute tension, des défauts locaux dans les films polymères, tels que polypropylène, polyester, polysulfone... etc, qui servent de diélectrique donnent lieu à des décharges locales qui oxydent ou volatilisent partiellement les métallisations déposées sur ces films, dans la région du claquage.

Dans une certaine limite, ces décharges sont utiles car, en détruisant une région affectée d'un défaut, elles restaurent l'isolement normal entre les armatures. Ce phénomène est connu sous le nom de "auto-cicatrisation".

Mais pour les condensateurs d'une certaine puissance, ayant donc une capacité élevée et fonctionnant sous quelques centaines de volts, l'énergie emmagasinée dans le condensateur, qui se libère dans une décharge locale, est telle que le condensateur peut être au moins localement détruit.

Pour éviter cette destruction, il est connu de diviser un condensateur de puissance en une pluralité de petits condensateurs, réunis entre eux, par l'intermédiaire d'un fusible, à une bande de métallisation continue. Ainsi, l'énergie stockée est divisée dans le même rapport de pluralité et, si un défaut se présente dans le diélectrique d'un condensateur élémentaire, la décharge n'est plus suffisante pour détruire tout ou partie du condensateur. Le fusible est volatilisé, et le condensateur élémentaire est isolé : la capacité totale diminue seulement de la valeur capacitive d'un condensateur élémentaire.

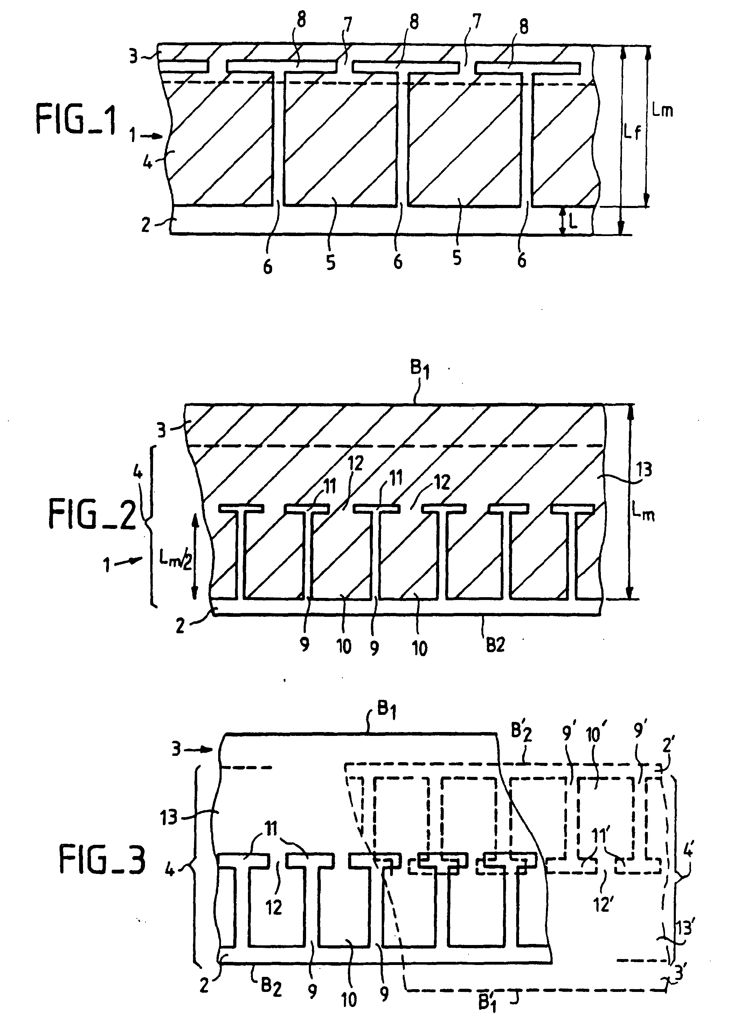

La figure 1 représente une vue partielle en plan d'un film métallisé utilisé pour réaliser de tels condensateurs selon l'art connu. Une armature peu être continue et l'autre armature crénelée selon la figure 1.

Le support physique est constitué par une bande de film diélectrique 1, qui peut être en polypropylène, polyester, polysulfone ou d'autres produits selon la constante diélectrique recherchée. Ce film 1 a une largeur L_{f} et il est métallisé, sur une face, sur une largeur Lₘ = L_{f} - l, à partir d'un bord : la bande de marge 2, non métallisée, de largeur "I" évite les court-circuits entre les deux armatures lorsque deux films sont bobinés (les deux bandes de marge 2, sur les deux films sont sur deux bords opposés).

La métallisation comporte deux régions.

Une première région 3, en bordure du film 1, délimitée sur la figure par un trait pointillé, est relativement épaisse : 0,02 micron. Cette bande est destinée à assurer le contact avec la métallisation de shoopage qui est projetée sur une extrémité du condensateur bobiné, pour y fixer une connexion axiale de sortie

Une seconde région 4 s'étend depuis le bord de la région épaisse 3 jusqu'à la marge non métallisée 2 : elle est relativement mince, 0,003 micron, de façon à être plus résistive.

La combinaison d'une métallisation épaisse et d'une métallisation fine permet d'allier deux qualités requises pour les condensateurs à haute énergie volumique : une bonne tenue en courant et en tension. En effet, la métallisation épaisse en bordure 3 permet de débiter un fort courant, tandis que la résistivité élevée de la métallisation fine dans la région 4 favorise les tensions élevées et se prête bien à l'auto-cicatrisation en cas de claquage.

Pour éviter une destruction totale du condensateur après un claquage, ou la perte d'une quantité de capacité trop élevée par volatilisation d'une métallisation fine, il est connu de diviser le condensateur en une pluralité de petits condensateurs élémentaires, en pratiquant, sur au moins l'une des deux armatures, des démétallisations partielles qui laissent le film polymère à nu dans des bandes séparatrices ou gardes.

Ainsi, un condensateur élémentaire comporte au moins une armature 5 entre deux gardes 6 tracées dans la métallisation fine 4, perpendiculairement aux bords du film 1. Il est avantageux de relier ce condensateur élémentaire à la métallisation épaisse 3 au moyen d'un fusible 7 déterminé par deux gardes 8, parallèles au bord du film 1.

Ces démétallisations se font par vaporisation du métal par un faisceau laser, procédé qui a prouvé sa supériorité sur les autres procédés, mais qui a cependant l'inconvénient de gondoler le film support 1. En effet, pour volatiliser la métallisation épaisse , il faut chauffer davantage, ce qui amène des tensions dans le film polymère qui a été étiré. Au cours du bobinage du condensateur, le film gondolé ne colle pas parfaitement sur un autre film non gondolé, ce qui entraîne des inconvénients au cours du shoopage, et une mauvaise définition de la capacité du condensateur, partiellement à air.

La solution proposée par l'invention consiste à reporter la définition des capacités élémentaires sur les deux armatures et à placer les fusibles dans la zone active du condensateur, sensiblement au milieu de la largeur du film polymère. Chacun des deux films polymères, qui sont montés tête-bêche impose que les bandes métallisées aient la même largeur, et que les fusibles soient -aux bandes de marge près- à mi-largeur des films polymères.

De façon plus précise, l'invention concerne un condensateur à haute énergie volumique, autocicatrisant, constitué d'un bobinage d'au moins deux films diélectriques métallisés, la métallisation de chacun des films comportant une région épaisse, sur un premier bord du film, et une région fine et résistive, favorable aux phénomènes d'auto-cicatrisation en cas de décharge sous haute tension, ce condensateur étant caractérisé en ce que, pour chacun des films, la partie métallisée est divisée *sensiblement par moitié* en une partie de métallisation continue qui comprend la région épaisse et en une partie de métallisation crénelée de façon à former des armatures de condensateurs élémentaires, chaque armature étant réunie à la métallisation continue par un fusible situé sensiblement au milieu de la largeur du film dans la région de métallisation résistive, *des condensateurs élémentaires étant formés, sur les deux moitiés des deux films*, *d'une part par une armature crénelée d'un premier film et la métallisation continue du deuxième film, d'autre part par une armature crénelée du deuxième film et la métallisation continue du premier film* disposé tête-bêche par rapport au deuxième.

L'invention sera mieux comprise, et ses avantages ressortiront de la description détaillée qui suit maintenant en liaison avec les figures jointes en annexe, qui représentent :
- une figure 1 : vue en plan d'un film métallisé selon l'art connu, exposé précédemment,
- figure 2 : vue en plan d'un film métallisé selon l'invention,
- figure 3 : vue montrant le montage tête bêche de deux films pour réaliser un condensateur bobiné selon l'invention,
- figures 4 et 5 : deux variantes de métallisation crénelées selon l'invention.

Dans les figures relatives à l'invention, les mêmes indices de repères sont conservés, lorsqu'ils ne prêtent pas à confusion avec la figure de l'art connu.

La figure 2 représente l'un des deux films métallisés nécessaires pour réaliser un condensateur bobiné à haute énergie volumique.

Il a en commun avec un film métallisé de l'art connu la présence d'un support physique, film diélectrique 1 en polymère qui se présente sous forme d'une bande ayant deux bords longitudinaux parallèles, B1 et B2. Il a reçu une métallisation qui le recouvre depuis un bord jusqu'à une marge de sécurité 2. Cette marge a pour objet d'éviter les court-circuits entre armatures lors du shoopage des extrémités du condensateur bobiné. La métallisation comporte également une région épaisse 3, qui assure le débit d'un fort courant, et une région résistive et fine 4, qui favorise l'auto-cicatrisation aux hautes tensions

La nouveauté réside en ce que les gardes démétallisées sont localisées dans sensiblement la moitié seulement de la métallisation, à partir de la marge 2. Une première série de gardes 9, perpendiculaires aux bords du film 1, définit des condensateurs élémentaires 10. La longueur de ces gardes 9 est d'environ la moitié de la largeur Lₘ de la métallisation. Une deuxième série de gardes 11, parallèles aux bords du film 1, sont tracées aux extrémités des gardes 9, au milieu de la métallisation. Celles-ci, qui dessinent un trait discontinu, définissent entre elles des fusibles 12. Les gardes 11 sont préférentiellement centrées par rapport aux gardes 9, mais cela n'est pas primordial.

Un film métallisé selon l'invention comporte donc une bande métallique continue 13, composée de la bande métallisée épaisse 3 et d'une partie de la bande métallisée résistive et fine 4, et une bande métallique crénelée, découpée dans le reste de la bande métallisée 4. Le courant qui charge les capacités élémentaires formées par les armatures 10 traverse les zônes restreintes et résistives 12 : si une décharge se produit à l'intérieur de l'aire d'une métallisation 10, le fusible 12 correspondant est volatilisé, et le condensateur s'auto-cicatrise.

L'avantage de cette structure par rapport à la structure de la figure 1 est que le travail de démétallisation par faisceau laser, pour créer les gardes 9 et 11, est entièrement dans la région de la couche métallisée fine 4 : une faible énergie est suffisante pour la volatiliser, et le film plastique 1 n'est plus gondolé, surtout près de la bordure B1.

La figure 3 montre comment sont disposés deux films métallisés selon l'invention pour bobiner un condensateur. Comme les deux films sont identiques, mais disposés tête bêche, les indices de repères de celui qui est en dessous, par rapport au plan de la figure, sont affectés d'un "prime". Par convention, pour faciliter la lecture de la figure, le film du dessous, en pointillés, est légèrement décalé par rapport au film du dessus.

On voit que les condensateurs élémentaires sont formés, sur les deux moitiés des films, d'une part par une armature 10, crénelée, et la métallisation continue 13', et d'autre part par une armature 10' et la métallisation continue 13. C'est en raison de la symétrie introduite parla disposition tête-bêche que les gardes 11 et les fusibles 12 sont préférentielement à mi-largeur de la partie métallisée sur chaque film polymère. Cette symétrie permet de bobiner un condensateur avec deux films qui sont identiques, ce qui simplifie la fabrication. En outre, les gardes démétallisés 11 et 11' se superposent, ce qui diminue la perte de capacité due aux gardes.

Outre l'avantage de ne plus faire gondoler le film polymère, cette structure divise par deux la perte de capacité consécutive à un claquage. En effet, pour une même longueur mesurée selon la direction de la longueur du film polymère, un condensateur élémentaire selon l'invention a une capacité moitié de celle d'un condensateur élémentaire selon l'art connu. Si une décharge se produit sous une armature 10, le fusible 12 est volatilisé, mais le condensateur élémentaire constitué par l'armature 10' tête-bêche avec la précédente est intact.

Le choix de la résistivité de la métallisation fine, du pas des créneaux et de la largeur des fusibles permet d'optimiser le système. Par exemple, les pertes engendrées par les fusibles, qui agissent en résistance au cours de la charge ou décharge d'un condensateur élémentaire peuvent être divisées par 4, puisque le courant qui les traverse est divisé par 2 ce qui permet un dimensionnement du fusible beaucoup plus précis.

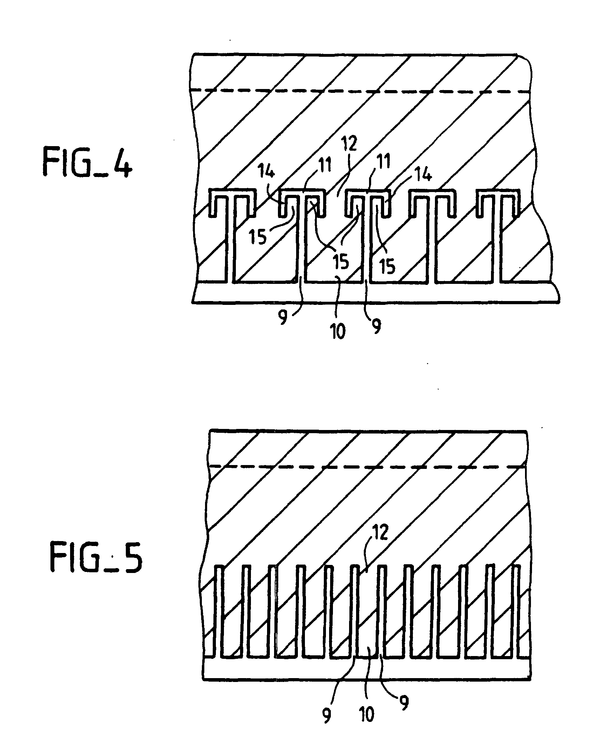

Sur les figures 2 et 3 les fusibles 12 sont allongés parallèlement aux bords du film. Il peut être intéressant de les disposer perpendiculairement à ces mêmes bords, comme le montre la figure 4. La largeur d'un fusible 12 est déterminée par l'espacement entre les extrémités en regard de deux gardes 11, et la longueur d'un fusible est définie par la longueur de deux gardes 14 qui sont tracées, à partir des extrémités des gardes 11, parallèlement aux gardes 9.

Il est avantageux de tracer des gardes 11 et 14 qui soient fines : cela permet de récupérer les surfaces métallisées 15 qui diminuent la perte de capacité due aux démétallisations partielles.

Le cas limite est représenté en figure 5. Si le pas des condensateurs élémentaires est égal à la largeur d'un fusible, la structure se réduit à une série de bandes métallisées séparées par des gardes 9. Les gardes 14 sont confondues avec les gardes 9, et les gardes 11 ont une longueur égale à la largeur des gardes 9. Chaque bande métallisée comprend une partie 12 qui se comporte en fusible, et une partie 10 qui se comporte en armature de condensateur élementaire.

La technologie selon l'invention est particulièrement adaptée aux condensateurs à très grande énergie volumique, tels que les condensateurs de filtrage à fort courant ou les condensateurs de décharge.

## Revendications

1. Condensateur à haute énergie volumique, autocicatrisant, constitué d'un bobinage d'au moins deux films diélectriques métallisés, la métallisation de chacun des films (1) comportant une région épaisse (3), sur un premier bord (B1) du film, et une région fine et résistive (4), favorable aux phénomènes d'auto-cicatrisation en cas de décharge sous haute tension, ce condensateur étant caractérisé en ce que, pour chacun des films, la partie métallisée (3+4) est divisée *sensiblement par moitié* en une partie de métallisation continue (13) qui comprend la région épaisse (3) et en une partie de métallisation crénelée de façon à former des armatures (10) de condensateurs élémentaires, chaque armature (10) étant réunie à la métallisation continue (13) par un fusible (12) situé sensiblement au milieu de la largeur du film (1) dans la région de métallisation résistive (4), *des condensateurs élémentaires étant formés, sur les deux moitiés des deux films, d'une part par une armature crénelée (10') d'un premier film et la métallisation continue du deuxième film, d'autre part par une armature crénelée (10) du deuxième film et la métallisation continue (13') du premier* film disposé tête-bêche par rapport au deuxième.

2. Condensateur selon la revendication 1, caractérisé en ce que les armatures (10) de condensateurs élémentaires sont définies par une première série de gardes (9), ou bandes dépourvues de métallisation, perpendiculaires aux bords (B1, B2) du film, qui s'étendent depuis un second bord (B2) du film jusque sensiblement le milieu du film (1).

3. Condensateur selon la revendication 2, caractérisé en ce que les fusibles (12) qui réunissent les armatures (10) de condensateurs élémentaires à la partie de métallisation continue (13) sont définis par une deuxième série de gardes (11), parallèles aux bords du film (1), situées en extrêmité des gardes (9) de la première série et sensiblement au milieu du film (1), l'espacement entre deux gardes (11) voisines de la deuxième série définissant la largeur d'un fusible (12).

4. Condensateur selon la revendication 3, caractérisé en ce que les fusibles (12) sont en outre définis par une troisième série de gardes (14), parallèles aux gardes (9) de la première série, qui s'étendent à partir de l'extrémité des gardes (11) de la deuxième série, la longueur des dites gardes (14) de la troisième série définissant la longueur d'un fusible (12).

5. Condensateur selon la revendication 1, caractérisé en ce que chacun des films (1) comprend en outre une marge (2) dépourvue de métallisation, située le long du bord (B2) du film opposé à celui (B1) qui supporte la métallisation épaisse (3).

## Patentansprüche

1. Selbstheilender Kondensator mit hoher Volumenenergie, gebildet durch eine Wicklung von wenigstens zwei metallisierten dielektrischen Filmen, wobei die Metallisierung jedes der Filme (1) einen dicken Bereich (3) an einem ersten Rand (B1) des Films sowie einen dünnen resistiven Bereich (4) enthält, der vorteilhaft für Selbstheilungseffekte im Falle eines Überschlags bei einer hohen Spannung ist, wobei der Kondensator dadurch gekennzeichnet ist, daß bei jedem der Filme der metallisierte Abschnitt (3+4) jeweils zur Hälfte in einen den dicken Bereich (3) enthaltenden Abschnitt mit durchgehender Metallisierung (13) und in einen Abschnitt mit Metallisierung unterteilt ist, die so eingekerbt ist, daß Beläge (10) von Elementarkondensatoren gebildet sind, wobei jeder Belag (10) mit der durchgehenden Metallisierung (13) über eine Schmelzsicherung (12) verbunden ist, die im wesentlichen in der Mitte der Breite des Films (1) in dem Bereich (4) der resistiven Metallisierung gelegen ist, wobei Elementarkondensatoren auf den beiden Hälften der beiden Filme gebildet sind, zum einen durch einen eingekerbten Belag (10') eines ersten Films und die durchgehende Metallisierung des zweiten Films und zum anderen durch einen eingekerbten Belag (10) des zweiten Films und die durchgehende Metallisierung (13') des ersten Films, der entgegengesetzt bezüglich des zweiten gerichtet ist.

2. Kondensator nach Anspruch 1, dadurch gekennzeichnet, daß die Beläge (10) der Elementarkondensatoren durch eine erste Reihe von Zwischenräumen (9) oder metallisierungsfreien Streifen bestimmt sind, die senkrecht zu den Rändern (B1, B2) des Films sind und sich von einem zweiten Rand (B2) des Films bis im wesentlichen in die Mitte des Films (1) erstrecken.

3. Kondensator nach Anspruch 2, dadurch gekennzeichnet, daß die die Beläge (10) der Elementarkondensatoren mit dem Abschnitt der durchgehenden Metallisierung (13) verbindenden Schmelzsicherungen (12) durch eine zweite Reihe von Zwischenräumen (11) bestimmt sind, die sich parallel zu den Rändern des Films (1) erstrecken und am Ende der Zwischenräume (9) der ersten Reihe und im wesentlichen in der Mitte des Films (1) angeordnet sind, wobei der Abstand zwischen zwei benachbarten Zwischenräumen (11) der zweiten Reihe die Breite einer Schmelzsicherung (12) bestimmt.

4. Kondensator nach Anspruch 3, dadurch gekennzeichnet, daß die Schmelzsicherungen (12) außerdem durch eine dritte Reihe von Zwischenräumen (14) bestimmt sind, die parallel zu den Zwischenräumen (9) der ersten Reihe sind und die sich ausgehend vom Ende der Zwischenräume (11) der zweiten Reihe erstrecken, wobei die Länge der Zwischenräume (14) der dritten Reihe die Länge einer Schmelzsicherung (12) bestimmt.

5. Kondensator nach Anspruch 1, dadurch gekennzeichnet, daß jeder der Filme (1) außerdem einen metallisierungsfreien Randbereich (2) enthält, der entlang dem zu dem die dicke Metallisierung (3) tragenden Rand (B1) entgegengesetzten Rand (B2) des Films angeordnet ist.

## Claims

1. Self-healing capacitor of high energy density, consisting of a winding of at least two metallized dielectric films, the metallization of each of the films (1) being made up of a thick region (3), on a first edge (B1) of the film, and a thin resistive region (4), favourable to self-healing phenomena in the event of high-voltage discharge, this capacitor being characterized in that, for each of the films, the metallized part (3+4) is divided approximately in half into a continuous metallization part (13) which comprises the thick region (3), and a crenellated metallization part so as to form elementary capacitor plates (10), each plate (10) being joined to the continuous metallization (13) via a fuse (12) located approximately in the middle of the width of the film (1), in the resistive metallization region (4), elementary capacitors being formed, on the two halves of the two films, on the one hand, by a crenellated plate (10') of a first film and the continuous metallization of the second film and, on the other hand, by a crenellated plate (10) of the second film and the continuous metallization (13') of the first film placed head to tail with the second.

2. Capacitor according to Claim 1, characterized in that the elementary capacitor plates (10) are defined by a first series of guards (9), or strips devoid of metallization, which are perpendicular to the edges (B1, B2) of the film and which extend from a second edge (B2) of the film up to approximately the middle of the film (1).

3. Capacitor according to Claim 2, characterized in that the fuses (12) which join the elementary capacitor plates (10) to the continuous metallization part (13) are defined by a second series of guards (11) which are parallel to the edges of the film (1) and located at the end of the guards (9) of the first series and approximately in the middle of the film (1), the gap between two adjacent guards (11) of the second series defining the width of a fuse (12).

4. Capacitor according to Claim 3, characterized in that the fuses (12) are furthermore defined by a third series of guards (14) which are parallel to the guards (9) of the first series and which extend from the end of the guards (11) of the second series, the length of said guards (14) of the third series defining the length of a fuse (12).

5. Capacitor according to Claim 1, characterized in that each of the films (1) furthermore comprises a margin (2) devoid of metallization and located along the edge (B2 of the film opposite that edge (B1) which supports the thick metallization (3).
